# EUROPEAN PATENT SPECIFICATION

(11) **EP 3 502 650 B1**
(45) Date of publication and mention of the grant of the patent: **19.07.2023**
(21) Application number: 17210499.4
(22) Date of filing: 22.12.2017
(51) Int. Cl.: G01N 1/28, B01L 3/02, G01N 35/10, G01N 1/42

(54) **METHOD OF AND APPARATUS FOR APPLYING LIQUID TO A SUBSTRATE**
VERFAHREN VON UND VORRICHTUNG ZUM AUFBRINGEN VON FLÜSSIGKEIT AUF EINEM SUBSTRAT
PROCÉDÉ ET APPAREIL POUR APPLIQUER UN LIQUIDE SUR UN SUBSTRAT

(43) Date of publication of application: 26.06.2019
(73) Proprietor: Universiteit Maastricht, 6211 LK Maastricht (NL)
(72) Inventor: NIJPELS, Franciscus Johannes Theresia, 3620 Veldwezelt (BE); RAVELLI, Raimond, 6331 BW Maastricht (NL); BEULEN, Bart Wilhelmus Anna Maria Mathis, 6101 JA Echt (NL); THEWESSEM, Sanne, 6171 VA Stein (NL); HENDERIKX, Rene Jacobus Maria, 6021 RE Haler (NL); HUYSMANS, Pascal Paul Marie, 6245 RK Eijsden (NL); LÓPEZ-IGLESIAS, Carmen, 6221 KN Maastricht (NL); PETER, Jacobus Peter Johannes, 6013 RP Hunsel (NL)
(74) Representative: De Vries & Metman

(56) References cited:
- WO-A1-00/25923
- WO-A1-03/000422
- WO-A1-2017/005297
- WO-A2-00/01798
- WO-A2-2008/034914
- US-A1- 2002 083 998
- RAVELLI RAIMOND B. G. ET AL: "Cryo-EM structures from sub-nl volumes using pin-printing and jet vitrification", NATURE COMMUNICATIONS, [Online] vol. 11, no. 1, 1 December 2020 (2020-12-01), XP055873922, DOI: 10.1038/s41467-020-16392-5 Retrieved from the Internet: URL:https://www.nature.com/articles/s41467 -020-16392-5.pdf> [retrieved on 2022-06-24]

## Description

The invention relates to a method of and an apparatus for applying liquid, in particular one or more samples, e.g. for imaging or diffraction experiments under cryogenic conditions, to a substrate, in particular a sample carrier, such as a film on a grid. Other examples of substrates include nanoreactors and nanofluidic devices, such as nanocapillary array membranes. Samples include (single) particles, e.g. macromolecular compounds and/or complexes thereof, e.g. proteins, DNA, RNA, viruses, cells, bacteria, nanoparticles, and crystals, for imaging, e.g. in a cryo-electron microscope (EM), or diffraction experiments, e.g. inspection by ionizing radiation, under cryogenic conditions.

T. Jain et al. "Spotiton: a prototype for an integrated inkjet dispense and vitrification system for cryo-TEM.", J Struct Biol. 2012 Jul;179(1):68-75, relates to method for EM specimen preparation based on small volume (picoliter to nanoliter) dispensing using inkjet technology. A piezo-electric inkjet dispenser is integrated with optical real-time cameras (100 Hz frame rate) to analyze picoliter to nanoliter droplet profiles in-flight and spreading dynamics on the grid, and thus provides a method to optimize timing of the process.

WO 2013/109405, WO 2013/109406 and US2014360286 disclose methods for preparing an electron microscopy sample on an EM sample grid, comprising: dispensing a plurality of discrete specimens onto an EM sample grid in an ordered array of specimen locations, each specimen of the plurality of discrete specimens being placed into an individual specimen location in the array of locations.

As explained in S. Arnold et al. "Blotting-free and lossless cryo-electron microscopy grid preparation from nanoliter-sized protein samples and single-cell extracts", Journal of Structural Biology, Volume 197, Issue 3, March 2017, Pages 220-226, transmission electron microscopy (TEM) of vitrified specimens has become a powerful technique for the high-resolution structural analysis of biological matter, and is increasingly recognized as a mainstream tool in biology.

Cryogenic sample-grid (cryo-EM grid) preparation and imaging methods ensure that biological specimens withstand the vacuum inside electron microscopes, allow their investigation while trapped at physiological conditions that conserve the structural arrangement of the biomolecules and reduce the effect of radiation damage. Arnold continues: these preparation methods have not improved significantly over the last 20 years and have some major drawbacks: a 2-4 pL sample volume is required, and 99.9% of the sample volume is lost during grid preparation, due to an extensive blotting step made with filter paper. Furthermore, blotting with filter paper can lead to protein aggregation or denaturation. The current state of the art sample preparation methods are recognized as one of the most significant limitations in cryo-EM.

Arnold relates to a method for cryo-electron microscopy (cryo-EM) that requires only 3-20 nL of sample to prepare a cryo-EM grid, depending on the protocol used. The sample is applied and spread on the grid by a microcapillary. This method is also described in WO 2017/005297.

It is an object of the present invention to provide an improved method of and apparatus for applying liquid to a substrate, in particular by further reducing the amount of liquid per application, e.g. the amount of liquid required for preparing an EM specimen, and/or improve reproducibility.

To this end, the method according to the present invention comprises the steps defined in claim 1.

In an embodiment, after the liquid touches the substrate, the entire volume of the liquid is captured between the applicator surface and the substrate (including liquid that penetrates into or spreads over the substrate).

With the method of the present invention, it is possible to apply amounts of liquid expressed in picoliters (pL) to a substrate. Thus, loss of sample is further reduced or, ideally, avoided altogether and/or reproducibility is improved.

In a further embodiment, after the liquid touches the substrate, the applicator surface is moved further towards the substrate, thus increasing the width of the capillary bridge (relative to the direction of the movement of the applicator surface) and/or providing a supply of liquid for application within the capillary bridge.

In another embodiment, the applicator surface is moved relative to the substrate in a (systematic) pattern, such as parallel straight lines or line segments (connected e.g. by turns), undulating lines or line segments, or a spiral, e.g. until the capillary bridge breaks. In an embodiment, the lines or segments of the same line partly overlap to form a wider layer.

In another embodiment, during application of the liquid to the substrate, the distance between the applicator surface and the substrate is reduced, e.g. the applicator
surface is moved gradually or stepwise towards the substrate to compensate for the reduced volume of the liquid in the capillary bridge resulting from application of the liquid to the substrate.

During application, the distance is preferably maintained in a range from 1 to 20 µm. Further, it is preferred that the liquid is applied in a pattern or layer having a thickness in a range from 10 nm to 10µm, preferably in range from 10 to 200 nm, preferably in range from 10 to 150 nm. Layer thickness can be influenced *inter alia* by the (adjustable) speed of the relative movement between the applicator surface and the substrate, the width of the applicator surface, the distance between the applicator surface and the substrate, which, at least with flat surfaces, defines the height of the capillary bridge, the viscosity of the liquid, and the (relative) hydrophilicity of the applicator surface and the substrate.

According to the invention, enabling accurate definition of and/or control over the amount and shape of the liquid on the applicator surface, the applicator surface is defined at an end of a pin, in particular a solid pin (comprising no lumen or capillary). In an example not forming part of the present invention, the applicator surface is defined as at least one hydrophilic area, preferably a continuous hydrophilic area or an array of hydrophilic areas, in a hydrophobic area or surroundings and/or the applicator surface is continuous and flat or (slightly) concave or convex. In an embodiment, the applicator surface has an area in a range from 1,0.1E3 to 50.1E3 µm², preferably in a range from 2,0.1E3 to 30.1E3 µm².

In an embodiment, the amount of liquid adhered to the applicator surface is smaller than 1000 pL (picoliter), preferably smaller than 500 pL, preferably smaller than 400 pL, preferably in a range from 10 to 300 pL, and/or the liquid on the applicator surface has a contact angle in a range from 20 to 90 degrees, preferably in a range from 25 to 55 degrees and/or the height of the liquid on the applicator surface is in a range from 1 to 30 µm. These parameters can be influenced e.g. by selecting area (µm²), shape, and hydrophilicity of the applicator surface in dependence of the properties of the liquid.

Yet another embodiment comprises the step of determining the distance between applicator surface and the substrate, before the liquid touches the substrate, preferably before adhering an amount of the liquid to the applicator surface. The distance can be determined e.g. by optics or by an inductive or an capacitive sensor.

In a refinement, the position of the applicator surface and/or of one or more locations on the substrate is measured, e.g. by positioning the tip of a pin defining the surface and one or more locations on the substrate in the focal plane of an on-axis camera, the measured position or positions are stored, preferably in a memory of a computer or controller memory, and the measured position or positions are used for positioning of the applicator surface relative to the substrate.

In an embodiment, two or more different samples, e.g. different substances and/or different concentrations of the same substance, are applied to the substrate.

In another embodiment, at least one reservoir, e.g. at least one pipette, is provided to supply the applicator surface with sample or samples. E.g., a droplet or meniscus is temporarily expelled from the reservoir, sample is taken from the droplet or meniscus by contacting the droplet or meniscus with the applicator surface or applicator surfaces, once or repeatedly until sufficient sample or samples has/have been applied to the substrate, and the droplet or meniscus is withdrawn into the reservoir. The reservoir containing the sample can be stored for future use.

In another embodiment, the substrate is exposed to a plasma, before applying the sample to the substrate. The plasma will (glow) discharge the substrate rendering it hydrophilic, which in turn facilitates a substantially even application of the sample to the substrate. Instead of or in addition to (glow) discharge, the plasma cleans the substrate. It is preferred that the substrate is subjected to a plasma just prior to applying the sample to the substrate, e.g. less than 15 minutes, preferably less than 10 minutes before applying the sample to the substrate.

In another embodiment, at least prior to and preferably also during and after application of the liquid to the substrate, the temperature of the substrate and/or of the applicator surface is adjusted to a temperature around, at or above the dew point of the gas surrounding the substrate and/or the applicator surface, preferably to one or more tenths of a degree, e.g. in a range from 0,1 to 1,0 degrees, below or above the dew point temperature of the gas surrounding the substrate and/or the applicator surface. In an example, the dew point temperature is calculated from temperature and humidity measurements of the gas surrounding the substrate and/or the applicator surface. The temperature of the substrate and/or the applicator surface is measured as well. These measurements are used in a closed feedback loop to control e.g. a Peltier element that thermally contacts the substrate and/or the applicator surface. Thus, exchange of water, in particular evaporation, between the liquid and the surrounding gas is suppressed or, ideally, prevented and reproducibility is further enhanced.

In a further embodiment, one or more of the above steps, preferably all steps are carried out in a closed chamber, preferably providing controlled temperature and humidity.

The invention also relates to an apparatus for applying liquid, in particular one or more samples, to a substrate according to claim 12.

In an embodiment, the controller is configured to effect one or more of the steps of the method(s) described above.

In an example not forming part of the present invention, the applicator surface is defined as at least one hydrophilic area, preferably a continuous hydrophilic area or an array of hydrophilic areas, in a hydrophobic area or surroundings and/or the applicator surface is continuous and flat or (slightly) concave or convex. In an embodiment, the applicator surface has an area in a range from 1,0.1E3 to 50.1E3 pm2, preferably in a range from 2,0.1E3 to 30.1E3 µm².

In another embodiment, the apparatus comprises an on-axis camera configured to determine the distance between applicator surface and a substrate in the substrate holder, in particular to measure the position of the applicator surface and/or of one or more locations on the substrate is measured, to store the measured position or positions, and to use the measured position or positions for positioning of the applicator surface relative to the substrate.

In another embodiment, the substrate holder and the applicator surface are located inside a climate chamber. In a refinement, the apparatus comprises a cooling and/or heating element for the substrate and/or the applicator surface, a temperature sensor and a humidity sensor, and a controller configured to calculate the dew point of the gas surrounding the substrate and/or the applicator surface and to adjust, by means of the element(s), the temperature of the substrate and/or the applicator surface to a temperature around, at or above the dew point of the gas surrounding the substrate and/or the applicator surface, preferably to within one or more tenths of a degree from the dew point.

Typically, the controller comprises a processor and a memory and is configured, e.g. programmed, to receive data on the positions of the substrate and the applicator surface and the temperature and humidity of the surrounding gas, to process such data, and to operate one or more drivers, e.g. stepper motors, that move the substrate and/or the applicator surface, and one or more cooling and/or heating elements. In general, the controller may be implemented in the form of any system including a processor and a memory that is capable of performing the functions described in this specification. Further, the controller may be coupled to one or more input/output (I/O) devices. Examples of input devices may include, but are not limited to, one or more camera's and/or sensors, one or more buttons, a (small) keyboard, touchscreen, or the like. Examples of output devices may include, but are not limited to, a monitor or a display, speakers, or the like. Input and/or output devices may be coupled to the data processing system either directly or through intervening I/O controllers.

US 2002/083998 relates to deposit device, e.g. a pin, cooperating with a fluid source defines a precisely sized drop of fluid of small diameter on a drop carrying surface. By repeated action, minute drops of fluid can be deposited precisely in a dense array, preferably under computer control.

WO2008/034914 discloses a dispensing device wherein at least one of the distal tip and the substrate are moved laterally relative to the other in order to produce elongated test zones.

WO 03/000422 relates to a two-pin dispensing system comprising a pair of separately movable pins for holding a droplet of liquid therebetween. Each pin includes a tip spaced predetermined distance from the other pin to define a sample acquisition region.

WO 00/01798 elates to a ceramic tip and a random access print head for the transfer of microfluidic quantities of fluid. In one preferred embodiment, the tip is used as a capillary or "gravity" pin to draw or collect source fluid and "spot" or deposit the fluid onto the target via physical contact (touch-off).

Within the framework of the present invention, the term "liquid" includes substances comprising a liquid phase, such as liquids containing (large) proteins and, non-Newtonian fluids (such as pastes and blood), which substances are capable of forming a capillary bridge. Typical samples are aqueous solutions of large biomolecules such as proteins. However, also samples such as fibres, vesicles, viruses, nanocrystals and polymers and any other solution or suspension of particulate sample could be applied to the grid by capillary coating.

The invention will now be explained in more detail with reference to the Figures, which show an embodiment of the present invention.
Figures 1A and 1B illustrate steps to determine the position of an applicator surface.
Figures 2A and 2B illustrate steps to determine the position of a substrate.
Figure 3 is a perspective view of a pin according to the present invention taking liquid from a reservoir.
Figure 4 illustrate the inspection of the liquid adhering to the applicator surface and positioning of the applicator surface relative to the substrate.
Figures 5 to 7 are side views and a perspective view showing the application of a liquid to a substrate.
Figure 8 is a side view of a mechanism for resiliently mounting an applicator.

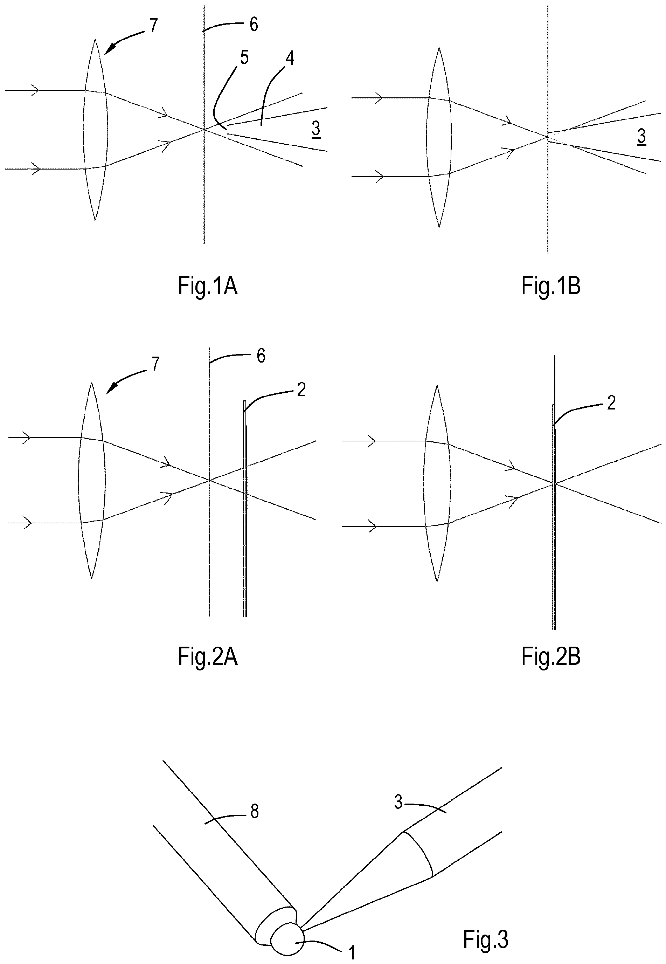

Figures 1 to 7 show an example of method of applying liquid, such as one or more samples 1, to a substrate, such as a so-called EM-grid 2, by means of an applicator in the form of a metal pin 3, e.g. a tungsten pin having a diameter of 1.6 mm.

The pin 3 has a frusto-conical tip 4 with an (imaginary) top angle of approximately 20 degrees and defining a flat end surface with sharp edges, serving as an applicator surface 5. The applicator surface was polished to obtain a platform having a diameter in a range from 50 to 200 pm, e.g. 100 µm. In this example, the tip is ultrasonically cleaned in ethanol.

As shown in Figures 1A and 1B, the applicator surface 5 at the end of the pin 3 is gradually positioned in the focal plane 6 of an on-axis camera 7 depicted as a lense. The position at which the applicator surface is in focus is stored and used as a reference for later positioning of the pin 3 relative to the EM-grid 2.

Subsequently, and shown in Figures 2A and 2B, the grid 2 is positioned (on a holder and brought) into the focal plane 6 of the on axis camera 7. Together with the position of the applicator surface, this provides the information needed to position the applicator surface at a defined distance away from the surface of the grid.

For non-planar grids, a focal series of the entire surface of the grid can be made in advance, to obtain a height map of the non-planar grid surface. This enables varying the absolute position of the pin (and thus the applicator surface) while maintaining a constant relative position of the pin to the grid.

Subsequently, and shown in Figure 3, the clean pin 3 is loaded with sample 1. The sample is stored in a reservoir, in this example a pipette 8, from which a small (sub-microliter) mother droplet is temporarily aspirated, preferably inside a climate chamber. The pin is brought into contact with the droplet, thus adhering an amount of the sample to the applicator surface of the pin.

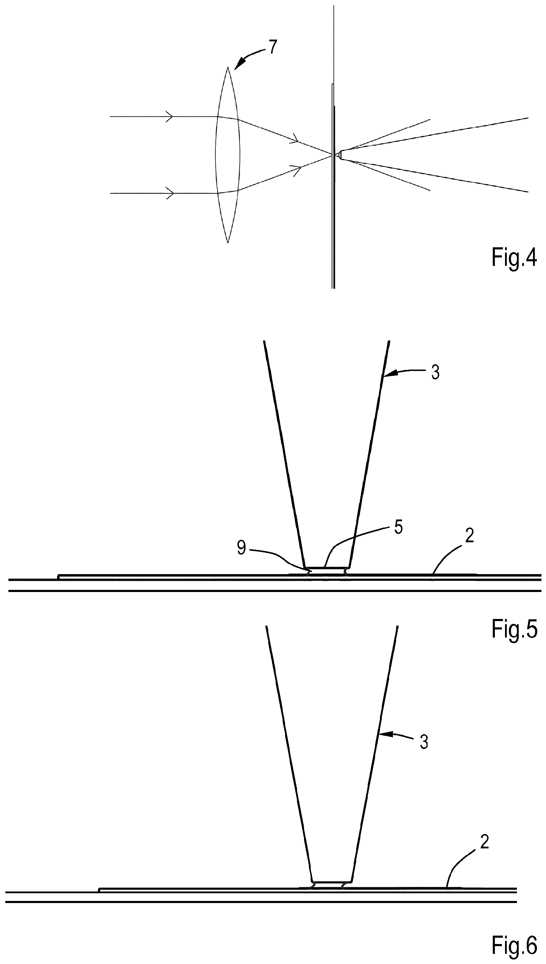

The liquid on the applicator surface is visually inspected, shown in Figure 4, and the contact angle between the liquid and the surface and the height of the liquid are determined. Typical contact angles and heights observed on surfaces having a diameter in a range from 50 to 200 µm are in a range from 25 to 55 degrees and in range from 10 to 30 pm, respectively. Evaporation of the liquid can be mitigated using a dewpoint control feedback loop on the pin and/or the grid.

The pin 3, now loaded with a sub-nanoliter droplet, is moved towards (glow discharged) grid and until a capillary bridge 9 is formed, as shown in Figure 5.

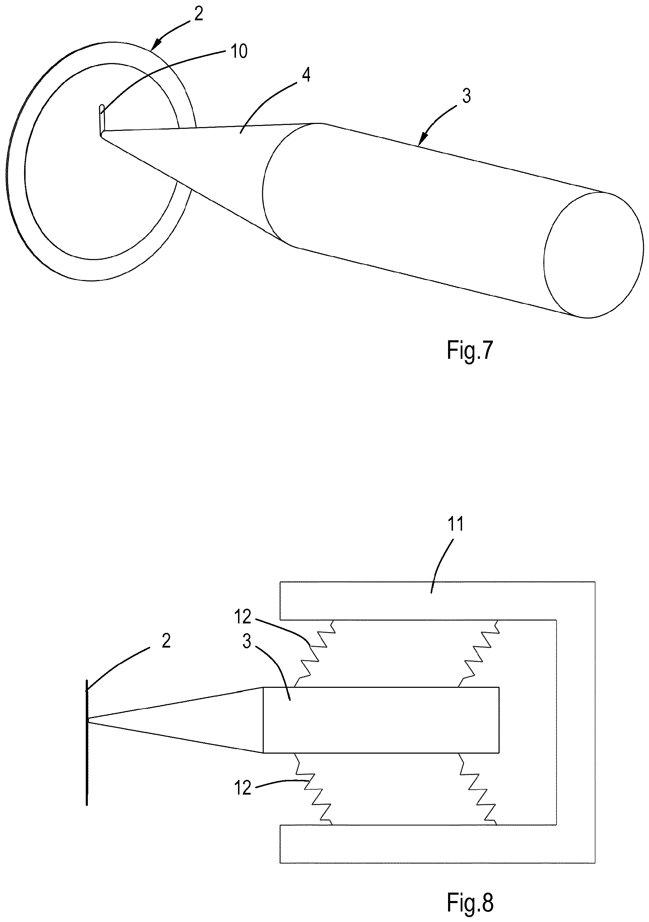

Relative movement of the grid 2 and the pin 3 will deform the capillary bridge due to capillary shear interaction and apply a line 10 or layer of the liquid 1 to the grid 2, as shown in Figures 6 and 7.

With the method of the present invention, it is possible to apply amounts of liquid expressed in picoliters (pL) to a substrate. Thus, loss of sample and/or changes in the concentrations in the sample are further reduced or, ideally, avoided altogether.

Suitable components for an apparatus for applying liquid to a substrate, such as a holder for the substrate, a climate chamber, electrodes for generating a plasma, a visualization system, sensors, and a Peltier element, are known in the art and described in, e.g., PCT patent application PCT/EP2017/065466.

The invention is not restricted to the above-described embodiments, which can be varied in a number of ways within the scope of the claims. In an example, shown in Figure 8, the pin 3 is mounted in a frame 11 by means of resilient elements 12, allowing the pin to move resiliently in the axial direction. By establishing a capillary bridge and retracting the frame away from the substrate 2 with a force smaller than the capillary force between the substrate and the applicator surface, the liquid holds the substrate and the pin together. During application, the pin will follow, within boundaries, the surface of the grid even if this surface is not flat.

## Claims

1. Method of applying one or more liquid samples (1) for imaging or diffraction experiments under cryogenic conditions to a substrate (2), comprising the steps of adhering an amount of the liquid (1) to an applicator surface (5) defined at an end of a solid pin 2 (3) comprising no lumen or capillary, moving the applicator surface (5) towards the substrate (2) until the liquid touches the substrate (2) and forms a capillary bridge (9) between the applicator surface (5) and the substrate (2), **characterized by** moving the applicator surface (5) along the substrate (2), wherein the relative movement will deform the capillary bridge due to capillary shear interaction and apply a line or layer of the liquid to the substrate

2. Method according to claim 1, wherein, after the liquid (1) touches the substrate (2), the entire volume of the liquid (1) is captured between the applicator surface (5) and the substrate (2).

3. Method according to claim 1 or 2, wherein, after the liquid (1) touches the substrate (2), the applicator surface (5) is moved further towards the substrate (2).

4. Method according to any one of the preceding claims, wherein the applicator surface (5) is moved relative to the substrate (2) in a pattern.

5. Method according to any one of the preceding claims, wherein, during application of the liquid (1) to the substrate (2), the distance between the applicator surface (5) and the substrate (2) is reduced and/or wherein said distance is maintained in a range from 1 to 20 µm and/or wherein the liquid (1) is applied in a pattern or layer having a thickness in a range from 10 nm to 10 pm, preferably in range from 10 to 200 nm.

6. Method according to any one of the preceding claims, wherein the amount of liquid (1) adhered to the applicator surface (5) is smaller than 1000 pL (picoliter), preferably smaller than 500 pL, preferably smaller than 400 pL, preferably in a range from 10 to 300 pL, and/or wherein the liquid (1) on the applicator surface (5) has a contact angle in a range from 20 to 60 degrees, preferably in a range from 25 to 55 degrees and/or the height of the liquid is in a range from 1 to 30 µm.

7. Method according to any one of the preceding claims, comprising the step of determining the distance between applicator surface (5) and the substrate (2), before the liquid (1) touches the substrate (2), preferably before adhering an amount of the liquid (1) to the applicator surface (5).

8. Method according to claim 7, wherein the position of the applicator surface (5) and/or of one or more locations on the substrate (2) is measured, the measured position or positions are stored, and the measured position or positions are used for positioning of the applicator surface (5) relative to the substrate (2).

9. Method according to any one of the preceding claims, wherein two or more different samples (1) are applied to the substrate (2).

10. Method according to any one of the preceding claims, wherein at least one reservoir (8) is provided to supply the applicator surface (5) with sample or samples (1) .

11. Method according to any one of the preceding claims, wherein, at least prior to and preferably also during and after application of the liquid (1) to the substrate (2), the temperature of the substrate and/or of the applicator surface is adjusted to a temperature within 1,0 degrees below or above the dew point of the gas surrounding the substrate and/or the applicator surface, preferably to within one or more tenths of a degree from the dew point.

12. Apparatus for applying one or more liquid samples (1) for imaging or diffraction experiments under cryogenic conditions to a substrate (2) comprising
a substrate holder,
an applicator surface (5) for adhering an amount of the liquid (1) to, which surface (5) is defined at the end of a solid pin (3) comprising no lumen or capillary,
one or more actuators for moving the applicator surface (5) and the substrate holder towards and relative to each other, and
a controller configured to drive the actuator(s) to move the applicator surface (5) and the substrate holder towards and relative to each other to form a capillary bridge (9) between the applicator surface (5) and a substrate (2) in the substrate holder and to apply the liquid (1) to the surface (2), **characterized in that** the liquid (1) is applied to the surface (2) by moving the applicator surface (5) along the substrate (2), wherein the relative movement will deform the capillary bridge due to capillary shear interaction and apply a line or layer of the liquid to the substrate.

13. Apparatus according to claim 12, comprising an on-axis camera (7) configured to determine the distance between applicator surface (5) and a substrate (2) in the substrate holder.

14. Apparatus according to claim 12 or 13, wherein the substrate holder and the applicator surface (5) are located inside a climate chamber.

## Patentansprüche

1. Verfahren zum Aufbringen einer oder mehrerer Flüssigkeitsproben (1) für Abbildungs- oder Beugungsexperimente unter kryogenen Bedingungen auf ein Substrat (2), aufweisend die folgenden Schritte:
Anhaftenlassen einer Menge der Flüssigkeit (1) an eine Applikatoroberfläche (5), die an einem Ende eines massiven Stifts (3), der kein Lumen und keine Kapillare aufweist, definiert ist,
Bewegen der Applikatoroberfläche (5) in Richtung auf das Substrat (2), bis die Flüssigkeit das Substrat (2) berührt und eine Kapillarbrücke (9) zwischen der Applikatoroberfläche (5) und dem Substrat (2) bildet,
**gekennzeichnet durch**
Bewegen der Applikatoroberfläche (5) entlang des Substrats (2), wobei die relative Bewegung die Kapillarbrücke aufgrund einer Kapillarscherwechselwirkung verformen wird und eine Linie oder Schicht der Flüssigkeit auf das Substrat aufbringen wird.

2. Verfahren nach Anspruch 1, wobei, nachdem die Flüssigkeit (1) das Substrat (2) berührt, das gesamte Volumen der Flüssigkeit (1) zwischen der Applikatoroberfläche (5) und dem Substrat (2) gefangen ist.

3. Verfahren nach Anspruch 1 oder 2, wobei, nachdem die Flüssigkeit (1) das Substrat (2) berührt, die Applikatoroberfläche (5) weiter gegen das Substrat (2) bewegt wird.

4. Verfahren nach einem der vorstehenden Ansprüche, wobei die Applikatoroberfläche (5) in einem Muster relativ zu dem Substrat (2) bewegt wird.

5. Verfahren nach einem der vorstehenden Ansprüche, wobei während des Aufbringens der Flüssigkeit (1) auf das Substrat (2) der Abstand zwischen der Applikatoroberfläche (5) und dem Substrat (2) verringert wird und/oder wobei dieser Abstand in einem Bereich von 1 bis 20 µm beibehalten wird, und/oder wobei die Flüssigkeit (1) in einem Muster oder einer Schicht mit einer Dicke im Bereich von 10 nm bis 10 pm, vorzugsweise in einem Bereich von 10 bis 200 nm, aufgebracht wird.

6. Verfahren nach einem der vorstehenden Ansprüche, wobei die an der Applikatoroberfläche (5) anhaftende Menge Flüssigkeit (1) kleiner als 1000 pL (Pikoliter), vorzugsweise kleiner als 500 pL, vorzugsweise kleiner als 400 pL, vorzugsweise in einem Bereich von 10 bis 300 pL, ist und/oder wobei die Flüssigkeit (1) an der Applikatoroberfläche (5) einen Kontaktwinkel in einem Bereich von 20 bis 60 Grad, vorzugsweise in einem Bereich von 25 bis 55 Grad, hat und/oder die Höhe der Flüssigkeit in einem Bereich von 1 bis 30 µm ist.

7. Verfahren nach einem der vorstehenden Ansprüche, aufweisend den Schritt eines Bestimmens des Abstands zwischen Applikatoroberfläche (5) und dem Substrat (2), bevor die Flüssigkeit (1) das Substrat (2) berührt, vorzugsweise vor Anhaftenlassen einer Menge der Flüssigkeit (1) an die Applikatoroberfläche (5).

8. Verfahren nach Anspruch 7, wobei die Position der Applikatoroberfläche (5) und/oder eines oder mehrerer Orte an dem Substrat (2) gemessen wird, die gemessene Position oder gemessenen Positionen gespeichert werden und die gemessene Position oder gemessenen Positionen zum Positionieren der Applikatoroberfläche (5) relativ zu dem Substrat (2) verwendet werden.

9. Verfahren nach einem der vorstehenden Ansprüche, wobei zwei oder mehr unterschiedliche Proben (1) auf das Substrat (2) aufgebracht werden.

10. Verfahren nach einem der vorstehenden Ansprüche, wobei mindestens ein Reservoir (8) bereitgestellt ist, um die Applikatoroberfläche (5) mit einer Probe oder Proben (1) zu versehen.

11. Verfahren nach einem der vorstehenden Ansprüche, wobei zumindest vor und vorzugsweise auch während und nach Aufbringen der Flüssigkeit (1) auf das Substrat (2) die Temperatur des Substrats und/oder der Applikatoroberfläche auf eine Temperatur innerhalb 1,0 Grad unter oder über dem Taupunkt des das Substrat und/oder die Applikatoroberfläche umgebenden Gases, vorzugsweise auf innerhalb eines oder mehr zehntel Grad vom Taupunkt, angepasst wird.

12. Vorrichtung zum Aufbringen einer oder mehrerer Flüssigkeitsproben (1) für Abbildungs- oder Beugungsexperimente unter kryogenen Bedingungen auf ein Substrat (2), aufweisend
einen Substrathalter,
eine Applikatoroberfläche (5), um daran eine Menge der Flüssigkeit (1) anhaften zu lassen, wobei die Oberfläche (5) an dem Ende eines massiven Stifts (3), der kein Lumen und keine Kapillare aufweist, definiert ist,
einen oder mehrere Aktuatoren zum Bewegen der Applikatoroberfläche (5) und des Substrathalters aufeinander zu und relativ zueinander, und
eine Steuerung, die konfiguriert ist, den oder die Aktuatoren anzutreiben, um die Applikatoroberfläche (5) und den Substrathalter aufeinander zu und relativ zueinander zu bewegen, um eine Kapillarbrücke (9) zwischen der Applikatoroberfläche (5) und einem Substrat (2) in dem Substrathalter zu bilden und die Flüssigkeit (1) auf die Oberfläche (2) aufzubringen,
**dadurch gekennzeichnet, dass** die Flüssigkeit (1) auf die Oberfläche (2) aufgebracht wird durch Bewegen der Applikatoroberfläche (5) entlang des Substrats (2), wobei die relative Bewegung die Kapillarbrücke aufgrund einer Kapillarscherwechselwirkung verformen wird und eine Linie oder Schicht der Flüssigkeit auf das Substrat aufbringen wird.

13. Vorrichtung nach Anspruch 12, aufweisend eine Auf-Achse-Kamera (7), die konfiguriert ist, den Abstand zwischen Applikatoroberfläche (5) und einem Substrat (2) in dem Substrathalter zu bestimmen.

14. Vorrichtung nach Anspruch 12 oder 13, wobei der Substrathalter und die Applikatoroberfläche (5) im Innern einer Klimakammer angeordnet sind.

## Revendications

1. Procédé d'application d'un ou plusieurs échantillons de liquide (1) pour des expériences d'imagerie ou de diffraction dans des conditions de cryogénie sur un substrat (2), comprenant les étapes consistant à faire adhérer une quantité du liquide (1) sur une surface (5) d'applicateur définie à une extrémité d'une tige solide (3) ne comprenant ni lumière ni capillaire, déplacer la surface (5) d'applicateur vers le substrat (2) jusqu'à ce que le liquide touche le substrat (2) et forme un pont capillaire (9) entre la surface (5) d'applicateur et le substrat (2), **caractérisé par** le déplacement de la surface (5) d'applicateur le long du substrat (2), dans lequel le déplacement relatif déformera le pont capillaire en raison d'une interaction de cisaillement capillaire et appliquera une ligne ou une couche du liquide sur le substrat.

2. Procédé selon la revendication 1, dans lequel, après que le liquide (1) a touché le substrat (2), le volume entier du liquide (1) est capturé entre la surface (5) d'applicateur et le substrat (2).

3. Procédé selon la revendication 1 ou 2, dans lequel, après que le liquide (1) a touché le substrat (2), la surface (5) d'applicateur est déplacée davantage vers le substrat (2).

4. Procédé selon l'une quelconque des revendications précédentes, dans lequel la surface (5) d'applicateur est déplacée par rapport au substrat (2) en un motif.

5. Procédé selon l'une quelconque des revendications précédentes, dans lequel, durant une application du liquide (1) sur le substrat (2), la distance entre la surface (5) d'applicateur et le substrat (2) est réduite et/ou dans lequel ladite distance est maintenue dans une plage de 1 à 20 µm et/ou dans lequel le liquide (1) est appliqué en un motif ou une couche ayant une épaisseur dans une plage de 10 nm à 10 pm, de préférence dans une plage de 10 à 200 nm.

6. Procédé selon l'une quelconque des revendications précédentes, dans lequel la quantité de liquide (1) adhérant à la surface (5) d'applicateur est inférieure à 1000 pL (picolitres), de préférence inférieure à 500 pL, de préférence inférieure à 400 pL, de préférence dans une plage de 10 à 300 pL, et/ou dans lequel le liquide (1) sur la surface (5) d'applicateur a un angle de contact dans une plage de 20 à 60 degrés, de préférence dans une plage de 25 à 55 degrés et/ou la hauteur du liquide est dans une plage de 1 à 30 pm.

7. Procédé selon l'une quelconque des revendications précédentes, comprenant l'étape consistant à déterminer la distance entre une surface (5) d'applicateur et le substrat (2), avant que le liquide (1) ne touche le substrat (2), de préférence avant l'adhérence d'une quantité du liquide (1) sur la surface (5) d'applicateur.

8. Procédé selon la revendication 7, dans lequel la position de la surface (5) d'applicateur et/ou d'un ou plusieurs emplacements sur le substrat (2) est mesurée, la position ou les positions mesurées sont stockées, et la position ou les positions mesurées sont utilisées pour un positionnement de la surface (5) d'applicateur par rapport au substrat (2).

9. Procédé selon l'une quelconque des revendications précédentes, dans lequel deux échantillons (1) différents ou plus sont appliqués sur le substrat (2).

10. Procédé selon l'une quelconque des revendications précédentes, dans lequel au moins un réservoir (8) est fourni pour apporter sur la surface (5) d'applicateur un échantillon ou des échantillons (1).

11. Procédé selon l'une quelconque des revendications précédentes, dans lequel, au moins avant et de préférence également durant et après une application du liquide (1) sur le substrat (2), la température du substrat et/ou de la surface d'applicateur est ajustée sur une température sur l'étendue de 1,0 degré en dessous ou au-dessus du point de rosée du gaz entourant le substrat et/ou la surface d'applicateur, de préférence sur l'étendue d'une ou plusieurs dizaines d'un degré à partir du point de rosée.

12. Appareil pour appliquer un ou plusieurs échantillons de liquide (1) pour des expériences d'imagerie ou de diffraction dans des conditions de cryogénie sur un substrat (2) comprenant
un support de substrat,
une surface (5) d'applicateur pour faire adhérer une quantité du liquide (1) sur celle-ci, laquelle surface (5) est définie à l'extrémité d'une tige solide (3) ne comprenant ni lumière ni capillaire,
un ou plusieurs actionneurs pour déplacer la surface (5) d'applicateur et le support de substrat l'un vers l'autre et l'un par rapport à l'autre, et
un dispositif de commande configuré pour entraîner l'actionneur ou les actionneurs à déplacer la surface (5) d'applicateur et le support de substrat l'un vers l'autre et l'un par rapport à l'autre pour former un pont capillaire (9) entre la surface (5) d'applicateur et un substrat (2) dans le support de substrat et pour appliquer le liquide (1) sur la surface (2), **caractérisé en ce que** le liquide (1) est appliqué sur la surface (2) en déplaçant la surface (5) d'applicateur le long du substrat (2), dans lequel le déplacement relatif déformera le pont capillaire en raison d'une interaction de cisaillement capillaire et appliquera une ligne ou une couche du liquide sur le substrat.

13. Appareil selon la revendication 12, comprenant une caméra dans l'axe (7) configurée pour déterminer la distance entre une surface (5) d'applicateur et un substrat (2) dans le support de substrat.

14. Appareil selon la revendication 12 ou 13, dans lequel le support de substrat et la surface (5) d'applicateur sont situés à l'intérieur d'une chambre climatique.
